Europäisches Patentamt

European Patent Office

Office européen des brevets

(19)

(11) Veröffentlichungsnummer: **0 143 434**
**B1**

(12) # EUROPÄISCHE PATENTSCHRIFT

(45) Veröffentlichungstag der Patentschrift:
01.06.88

(51) Int. Cl.⁴: **G 01 L 5/16**

(21) Anmeldenummer: **84114080.9**

(22) Anmeldetag: **22.11.84**

(54) **Messnabe.**

(30) Priorität: **26.11.83 DE 3342817**

(43) Veröffentlichungstag der Anmeldung:
**05.06.85 Patentblatt 85/23**

(45) Bekanntmachung des Hinweises auf die Patenterteilung:
**01.06.88 Patentblatt 88/22**

(84) Benannte Vertragsstaaten:
**DE FR GB IT SE**

(56) Entgegenhaltungen:
**US - A - 3 867 838**

**PATENTS ABSTRACTS OF JAPAN, Band 5, Nr. 46
(P-54)(718), 27. März 1981; & JP - A - 56 631 (TOYO
BOLDWIN K.K.) 07.01.1981
RAIL INTERNATIONAL, Band 2, Nr. 5, Mai 1971, Seiten
499-500, Bruxelles, BE; "Force measuring cells"**

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Angerer, Siegfried, Freienrieder Weg 2,
D-8904 Friedberg (DE)**

(74) Vertreter: **Bullwein, Fritz, Bayerische Motoren Werke
Aktiengesellschaft
Postfach 40 02 40 Petuelring 130 AJ-33,
D-8000 München 40 (DE)**

# Beschreibung

Die Erfindung bezieht sich auf eine Messnabe zur Messung von über eine Welle auf einen Rotationskörper übertragenen Kräften mit Richtungen quer zu und längs der Welle.

Derartige Messnaben finden beispielsweise im Rahmen von Prüfständen Verwendung. Ganz allgemein besteht dabei das Problem, dass einerseits über die Messnabe hohe Kräfte übertragen werden müssen und andererseits auch bei derart hohen Kräften eine genaue Bestimmung dieser Kräfte ohne die Gefahr einer Zerstörung der verwendeten Messwertgeber erfolgen muss.

Der Erfindung liegt die Aufgabe zugrunde, eine Messnabe der eingangs genannten Art zu schaffen, mit der auch hohe Kräfte quer und längs der Welle übertragen und sicher gemessen werden.

Die Erfindung löst diese Aufgabe dadurch, dass die Messnabe so ausgebildet ist, dass sie über zwei durch eine Brücke miteinander verbundene Flansche an der Welle und am Rotationskörper befestigt werden kann und dass die beiden Flanschen durch einen Messkörper mit zwei parallelen Deckflächen zusätzlich miteinander verbunden sind, deren Normalen zu den Richtungen der Kräfte senkrecht stehen und in denen in diesen Richtungen empfindliche, jeweils parallele Messgeber sitzen.

Die Brücke überträgt dabei einen Grossteil der auftretenden Kräfte. Auf den Messkörper entfällt nur ein Bruchteil dieser Kräfte, so dass dieser vor einer Überlastung bzw. Überbeanspruchung geschützt ist. Die auf den Messkörper wirkenden relativ kleinen Kräfte können auf einfache Weise, beispielsweise mit Hilfe einer Druck- oder Wegmessung bestimmt werden. Die Brücke dient ferner dazu, zusätzliche Spitzenbelastungen der Messnabe durch die auftretenden Kräfte für den Messkörper weitgehend zu kompensieren. Hierzu gehören beispielsweise unterschiedliche Verdrehungen der beiden Flansche oder das Kippen der Flansche um die in Richtung der Wellenachse gelegene Mittelachse der Messnabe.

Da der Messkörper nur relativ geringen Kräften ausgesetzt ist, kann seine Empfindlichkeit auf einfache Weise eingestellt werden. Hierzu wird sein quer zur Mittelachse gemessener Querschnitt um so dünner gewählt, je grösser die gewünschte Empfindlichkeit ist.

Die Messnabe kann darüber hinaus die Möglichkeit bieten, elektrische Zuleitungen zwischen dem Rotationskörper und der Welle aufzunehmen. Hierzu besitzt die Messnabe eine zentrale Bohrung in Richtung der Wellenachse, zu deren beiden Seiten der dann zweigeteilte Messkörper symmetrisch angeordnet ist. Durch eine weitere, senkrecht zu dieser Bohrung verlaufende Bohrung kann der Querschnitt der beiden Messkörperteile entsprechend dem gewünschten Empfindlichkeitsanforderungen eingestellt werden.

Die Bestimmung der am Ort des Messkörpers auftretenden Kräfte kann, wie bereits ausgeführt, beispielsweise mit Hilfe einer Wegmessung vorgenommen werden. Hierzu sind Weggeber, beispielsweise in Form von Dehnungsmessstreifen zentral auf den Deckflächen des Messkörpers angeordnet. Für beide Kraftrichtungen ist dabei jeweils ein Weggeber vorgesehen. Da es aus Gründen der Messgenauigkeit vorteilhaft ist, die Weggeber möglichst zentral anzuordnen, kann in jeder der Deckflächen der Weggeber für eine Kraftrichtung zentral und der Weggeber für die andere Kraftrichtung zweigeteilt und zu beiden Seiten des ersten Weggebers in der Mittelebene der Messnabe auf der Deckfläche des Messkörpers angeordnet sein. Beide Deckflächen besitzen dieselbe Anordnung von Weggebern, von denen die jeweils zu einer Kraftrichtung gehörenden beispielsweise in einem elektrischen Brückennetzwerk eingeschaltet sind.

Zwar ist, wie oben erläutert der Messkörper weitgehend vor Einflüssen geschützt, die aus einer unterschiedlichen Verdrehung bzw. Kippung der beiden Flansche resultieren. Um einen vollständigen Ausgleich dieser Einflüsse zu erzielen, kann der Weggeber für die Kraft quer zur Wellenachse auf jeder der beiden Deckflächen jeweils aus zwei Weggebern bestehen, die unter einem Winkel von jeweils 45° bezüglich der Mittelachse der Messnabe und zueinander symmetrisch verlaufen. Die aus jeweils zwei dieser Weggebern bestehende Anordnung für diese Kraftrichtung kann dann in einem Brückennetzwerk ohne zusätzliche Abgleichwiderstände direkt eingeschaltet sein.

Um auch bei der Messung der Kräfte längs der Wellenachse derartige Fehleinflüsse zu vermeiden, kann hierfür eine Anordnung gewählt werden, deren Weggeber jeweils in und senkrecht zu der Kraftrichtung empfindlich sind.

In der Zeichnung ist ein Ausführungsbeispiel einer Messnabe nach der Erfindung dargestellt. Es zeigt

Fig. 1 die Messnabe in perspektivischer Darstellung teilweise geschnitten,

Fig. 2 einen Schnitt durch die Mittelebene der Messnabe von Figur 1,

Fig. 3 eine Brückenschaltung zur Bestimmung der Kraft in der einen Richtung und

Fig. 4 eine entsprechende Brückenschaltung für die Kraft in der anderen Richtung.

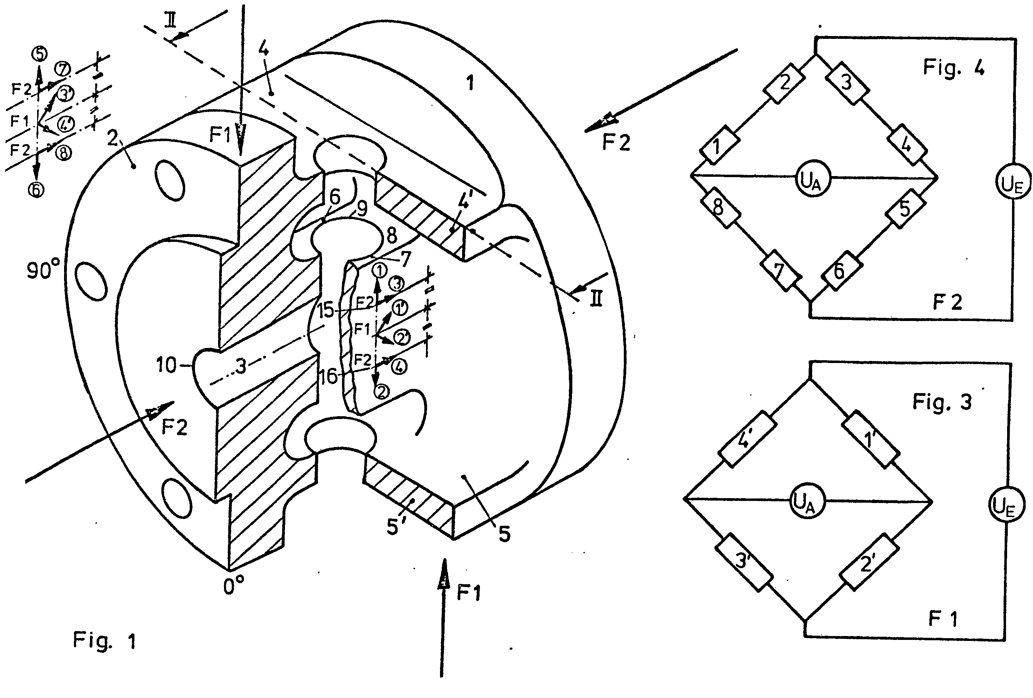

Die Messnabe von Figur 1 besitzt zwei zueinander parallele Flansche 1 und 2, die beispielsweise in einem Räderprüfstand zwischen einem nicht dargestellten Rad und einer ebenfalls nicht gezeigten Welle liegen. Dabei ist am Flansch 2 das Rad und am Flansch 1 die Welle befestigt. Über die Welle und die Messnabe werden Kräfte $F_1$ quer zu und Kräfte $F_2$ längs der Wellenachse auf das Rad übertragen. Die Wellenachse fällt mit der Mittelachse 3 der Messnabe zusammen.

Die Flansche 1 und 2 sind über eine Brücke fest miteinander verbunden, die aus zwei Teilen 4 und 5 besteht. Ferner verbindet ein ebenfalls aus zwei Teilen 6 und 7 bestehender Messkörper 8 die beiden Flansche 1 und 2. Zwei zueinander senkrechte Bohrungen gleichen Durchmessers 9 und 10 durchdringen den Messkörper 8 und verlaufen in Richtung der Kräfte $F_1$ und $F_2$. Dabei dient die

Bohrung 10 dazu, nicht dargestellte Zuleitungen zwischen der Nabe und dem Rad aufzunehmen, über die beispielsweise Messwertgeber für die Belastung des Rades an externen Messgeräten angeschlossen werden können.

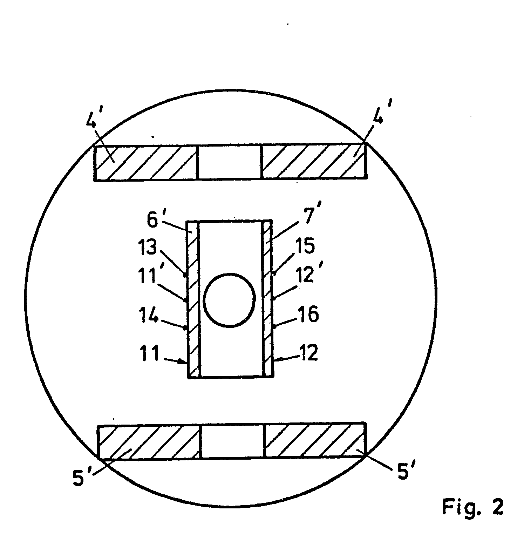

Die Bohrung 9 dient dazu, den Querschnitt 6' bzw. 7' der Teile 6 und 7 in der Mittelebene der Messnabe gegenüber den Querschnitten 4' bzw. 5' der Brücken-Teile 4 und 5 klein zu halten. Dies ist besonders in Figur 2 zu erkennen. Damit ergibt sich, dass die zwischen der Welle und dem Rad auftretenden Kräfte im wesentlichen über die Brücke übertragen werden, während nur ein geringer Bruchteil dieser Kräfte auf den Messkörper 8 einwirkt. Damit lassen sich auch grosse Kräfte mit Hilfe des Messkörpers 8 bestimmen.

Hierzu sind auf den beiden Deckflächen 11 und 12 der Teile 6 und 7 Weggeber angeordnet. Der eine Weggeber sitzt im Mittelpunkt 11' der Deckfläche 11. Er besteht aus zwei Dehnungsmessstreifen, die mit 1' und 2' bezeichnet sind (Figur 1) und unter einem Winkel von 45° zueinander symmetrisch und in Richtung der Mittelachse 3 verlaufen. Im Mittelpunkt 12' der Deckfläche 12 befindet sich ein in derselben Weise aus zwei Dehnungsmessstreifen 3' und 4' bestehender Weggeber. Die Dehnungsmessstreifen 1' bis 4' sind in der in Figur 3 dargestellten Weise in einer Brückenschaltung angeordnet und liefern ein Ausgangssignal $U_A$, das ausschliesslich ein Mass für die Kraft $F_1$ ist.

Bei einer Kraft ausschliesslich in Richtung der Kraft $F_1$ führt dies aufgrund der symmetrischen Anordnung der beiden Weggeber in den Mittelpunkten dazu, dass die Dehnungsmessstreifen 1' und 3' im gleichen Sinne und die Dehnungsmessstreifen 2' und 4' im entgegengesetzten Sinne belastet werden. Die resultierende Brückenspannung $U_A$ ist somit ein Mass für die Kraft $F_1$. Eine Kraft in Richtung der Kraft $F_2$ führt infolge der symmetrischen Ausrichtung der Dehnungsmessstreifen 1' bis 4' dazu, dass diese sämtlich in derselben Weise belastet werden; die Brückenspannung $U_A$ behält damit ihren ursprünglichen Wert, in der Regel von 0 bei.

Eine Kraft senkrecht zur Richtung der Kräfte $F_1$ und $F_2$ ergibt ebenfalls keine Änderung der Brückenspannung, da die Dehnungsmessstreifen senkrecht zu dieser Kraft ausgerichtet sind und daher darauf nicht ansprechen. Ebenfalls keine Auswirkung auf die Brückenspannung $U_A$ ergibt sich, wenn die beiden Flansche 1 und 2 gegeneinander verdreht werden. In diesem Fall werden die Dehnungsmessstreifen 1' und 4' in gleicher Weise, das heisst in der gleichen Richtung und um denselben Betrag, belastet, während die Dehnungsmessstreifen 2' und 3' in der entgegengesetzten Weise belastet sind.

Schliesslich sei der Fall betrachtet, bei dem die Flansche 1 und 2 um die Richtung der Kraft $F_1$ gekippt werden. Dabei werden die Dehnungsmessstreifen 1' und 2' in der gleichen und die Dehnungsmessstreifen 3' und 4' in der entgegengesetzten Weise belastet. Auch dieser Fall hat keine Auswirkungen auf die Brückenspannung.

Die Bestimmung der Kraft $F_2$ erfolgt in ähnlicher Weise mit Hilfe von jeweils zwei Weggebern in den beiden Deckflächen 11 und 12, die in der Mittelebene der Messnabe in Punkten 13 und 14 bzw. 15 und 16 symmetrisch bezüglich dem Mittelpunkt 11' bzw. 12' angeordnet sind. Diese Weggeber bestehen aus je zwei Dehnungsmessstreifen, 1 und 3; 2 und 4; 5 und 7; 6 und 8, die in der Figur 1 dargestellten Weise ausgerichtet und wie Figur 4 gezeigt in einer Brückenschaltung zusammengeschaltet sind. Auch diese Brückenschaltung reagiert nur auf Kräfte in Richtung der Kraft $F_2$, das heisst ausschliesslich auf Druck- und Zugkräfte, die von der Welle auf das Rad übertragen werden.

Anstelle der Ausführung des Weggebers für die Bestimmung der Kraft $F_1$ mit insgesamt 4 Dehnungsmessstreifen 1' bis 4' und des Weggebers für die Kraft $F_2$ mit insgesamt acht Dehnungsmessstreifen 1 bis 8 ist auch die umgekehrte Anordnung möglich. Das bedeutet, dass für die Kraft $F_1$ acht Dehnungsmessstreifen verwendet werden, die in den Punkten 13 bis 16 paarweise angeordnet und unter jeweils einem Winkel von 45° entsprechend den Dehnungsmessstreifen 1' und 2' ausgerichtet sind. Anstelle der Dehnungsmessstreifen 1 bis 8 sind für die Bestimmung der Kraft $F_2$ dann nur noch vier Dehnungsmessstreifen zu verwenden, die paarweise in den Punkten 11' und 12' in Richtung der Kraft $F_2$ und senkrecht hierzu, das heisst beispielsweise wie die Dehnungsmessstreifen 3 und 1 angeordnet und ausgerichtet sind.

**Patentansprüche**

1. Messnabe zur Messung von über eine Welle auf einen Rotationskörper übertragenen Kräften mit Richtungen quer zu und längs der Welle, dadurch gekennzeichnet, dass die Messnabe so ausgebildet ist, dass sie über zwei durch eine Brücke (4, 5) miteinander verbundene Flansche (1, 2) an der Welle und am Rotationskörper befestigt werden kann und dass die beiden Flansche (1, 2) durch einen Messkörper mit zwei zueinander parallelen Deckflächen (11, 12) zusätzlich miteinander verbunden sind, deren Normalen zu den Richtungen der Kräfte ($F_1$ und $F_2$) senkrecht stehen und in denen in diesen Richtungen empfindliche, jeweils parallele Messgeber (1' bis 4' und 1 bis 8) sitzen.

2. Messnabe nach Anspruch 1, dadurch gekennzeichnet, dass der Querschnitt (6', 7') des Messkörpers (8) senkrecht zur Wellenachse (3) wesentlich geringer als der entsprechende Querschnitt (4', 5') der Brücke (4, 5) ist.

3. Messnabe nach einem der Ansprüche 1 oder 2, dadurch gekennzeichnet, dass der Messkörper (8) aus zwei Teilen (6, 7) besteht und eine zentrale Bohrung (10) in Richtung der Wellenachse (3) besitzt.

4. Messnabe nach Anspruch 3, dadurch gekennzeichnet, dass der Messkörper (8) zusätzlich eine zentrale Bohrung (9) in Richtung der quer zur Wellenachse verlaufenden Kraft ($F_1$) besitzt.

5. Messnabe nach einem der Ansprüche 1 bis 4, gekennzeichnet durch Weggeber als Messgeber für die Bestimmung der Kräfte, die zentral in der Mittelebene der Messnabe und symmetrisch in den Deckflächen (11, 12) des Messkörpers liegen.

6. Messnabe nach Anspruch 5, dadurch gekennzeichnet, dass die Weggeber Dehnungsmessstreifen sind, von denen die zu einer Kraftrichtung gehörenden in einer Messbrücke eingeschaltet sind.

7. Messnabe nach Anspruch 5 oder 6, dadurch gekennzeichnet, dass die Weggeber für die Kraft ($F_1$) quer zur Wellenachse (3) aus jeweils zwei Dehnungsmessstreifen (1', 2' bzw. 3' und 4') besteht, die im gleichen Sinne unter einem Winkel von 45° in Richtung der Wellenachse (3) ausgerichtet sind.

8. Messnabe nach einem der Ansprüche 5 bis 7, dadurch gekennzeichnet, dass der Weggeber für die Kraft ($F_2$) in Richtung der Wellenachse (3) jeweils zwei Dehnungsmessstreifen (1 und 3, 2 und 4, 5 und 7, 6 und 8) enthält, die in dieser Richtung und senkrecht hierzu ausgerichtet sind.

**Revendications**

1. Moyeu de mesure pour mesurer des efforts transmis par l'intermédiaire d'un arbre à un solide de révolution, transversalement et longitudinalement par rapport à cet arbre, moyeu de mesure caractérisé en ce que ce moyeu de mesure peut être fixé à l'arbre et au solide de révolution par l'intermédiaire de deux brides (1, 2) reliées ensemble par un pont (4, 5), et que les deux brides (1, 2) sont, en outre, reliées ensemble par un corps de mesure comportant deux surfaces de recouvrement parallèles l'une à l'autre (11, 12), dont les normales sont perpendiculaires aux directions des efforts ($F_1$ et $F_2$) et sur lesquelles sont placés dans ces directions, des indicateurs sensibles de mesure, respectivement parallèles (1' à 4' et 1 à 8).

2. Moyeu de mesure selon la revendication 1, caractérisé en ce que la section transversale (6', 7') du corps de mesure (8), perpendiculairement à l'axe (3) de l'arbre, est notablement plus réduite que la section transversale correspondante (4', 5') du pont (4, 5).

3. Moyeu de mesure selon une des revendications 1 ou 2, caractérisé en ce que le corps de mesure (8) est constitué de deux parties (6, 7) et comporte un perçage central (10) en direction de l'axe (3) de l'arbre.

4. Moyeu de mesure selon la revendication 3, caractérisé en ce que le corps de mesure (8) comporte, en outre, un perçage central (9) en direction de l'effort ($F_1$) transversal à l'axe de l'arbre.

5. Moyeu de mesure selon une des revendications 1 à 4, caractérisé en ce qu'il comporte des indicateurs de course jouant le rôle d'indicateurs de mesure pour la détermination des efforts, et qui sont situés centralement dans le plan médian du moyeu de mesure et symétriquement sur les surfaces de recouvrement (11, 12) du corps de mesure.

6. Moyeu de mesure selon la revendication 5, caractérisé en ce que les indicateurs de course sont des jauges de mesure d'extension, dont celles correspondant à la direction d'un effort sont branchées sur un pont de mesure.

7. Moyeu de mesure selon la revendication 5 ou 6, caractérisé en ce que les indicateurs de course pour l'effort ($F_1$) transversal à l'axe (3) de l'arbre sont respectivement constitués de deux jauges de mesure d'extension (1', 2' ou 3' et 4') qui sont orientées dans le même sens sous un angle de 45° en direction de l'axe (3) de l'arbre.

8. Moyeu de mesure selon l'une des revendications 5 à 7, caractérisé en ce que l'indicateur de course pour l'effort ($F_2$) en direction de l'axe (3) de l'arbre, comporte respectivement deux jauges de mesure d'extension (1 et 3, 2 et 4, 5 et 7, 6 et 8), orientées dans cette direction et perpendiculairement par rapport à celle-ci.

**Claims**

1. A torque indicator for the measurement of forces transmitted via a shaft to a rotational body with directions transverse to and along the shaft, characterised in that the torque indicator is so constructed that it may be attached via two flanges (1, 2) connected with each other by a bridge (4, 5) on the shaft and on the rotational body, and that the two flanges (1, 2) are additionally connected with each other by a measurement body with two cover surfaces (11, 12) parallel to each other, the normals of which stand vertically to the directions of the forces ($F_1$ and $F_2$) and in which respective parallel sensors (1' to 4' and 1 to 8) which are sensitive in these directions are situated.

2. A torque indicator according to Claim 1, characterised in that the cross-section (6', 7') of the measurement body (8) vertically to the shaft axis (3) is substantially less than the corresponding cross-section (4', 5') of the bridge (4, 5).

3. A torque indicator according to either one of Claims 1 or 2, characterised in that the measurement body (8) comprises two parts (6, 7) and has a central bore (10) in the direction of the shaft axis (3).

4. A torque indicator according to Claim 3, characterised in that the measurement body (8) additionally has a central bore (9) in the direction of the force ($F_1$) running transversely to the shaft axis.

5. A torque indicator according to any one of Claims 1 to 4, characterised by motion pickups as sensors to determine the forces, which lie centrally in the median plane of the torque indicator and symmetrically in the cover surfaces (11, 12) of the measurement body.

6. A torque indicator according to Claim 5, characterised in that the motion pickups are strain gauge strips, of which those belonging to one force direction are connected in a measuring bridge.

7. A torque indicator according to Claim 5 or 6, characterised in that the motion pickup for the force ($F_1$) transversely to the shaft axis (3) comprises two respective strain gauge strips (1', 2' or respectively 3' and 4'), which are aligned in the same direction at an angle of 45 degrees in the direction of the shaft axis (3).

8. A torque indicator according to any one of Claims 5 to 7, characterised in that the motion pickup for the force ($F_2$) in the direction of the shaft axis (3) comprises two strain gauge strips (1 and 3, 2 and 4, 5 and 7, 6 and 8) respectively which are aligned in this direction and vertically thereto.

1/2

Fig. 4

Fig. 3

F1

F2

$U_E$

$U_A$

Fig. 1

Fig. 2